# EUROPÄISCHE PATENTSCHRIFT

(11) **EP 1 756 531 B1**
(45) Veröffentlichungstag und Bekanntmachung des Hinweises auf die Patenterteilung: **10.04.2013**
(21) Anmeldenummer: 04739917.5
(22) Anmeldetag: 16.06.2004
(51) Int. Cl.: G01F 1/58

(54) **MAGNETISCH-INDUKTIVER DURCHFLUSSAUFNEHMER**
MAGNETICALLY INDUCTIVE FLOW RATE SENSOR
CAPTEUR DE DEBIT A INDUCTION MAGNETIQUE

(43) Veröffentlichungstag der Anmeldung: 28.02.2007
(73) Patentinhaber: Endress+Hauser Flowtec AG, 4153 Reinach (CH)
(72) Erfinder: ZINGG, Thomas, CH-4055 Basel (CH)
(74) Vertreter: Andres, Angelika Maria
(86) Internationale Anmeldenummer: PCT/EP2004/006448
(87) Internationale Veröffentlichungsnummer: WO 2005/124292

(56) Entgegenhaltungen:
- EP-A- 0 895 066
- US-A- 3 610 040
- US-A- 4 214 477
- PATENT ABSTRACTS OF JAPAN Bd. 004, Nr. 184 (P-041), 18. Dezember 1980 (1980-12-18) & JP 55 126820 A (TOSHIBA CORP; others: 01), 1. Oktober 1980 (1980-10-01)

## Beschreibung

Die Erfindung betrifft einen magnetisch-induktive Durchflussaufnehmer mit einem von einem zu messenden, elektrisch leitfähigen Fluid durchströmten Meßrohr und mit der Erzeugung eines das Fluid durchsetzenden Magnetfelds dienenden Sattelspulen.

Als Durchflussaufnehmer wird für die Zwecke der Beschreibung der Erfindung der im wesentlichen mechanische Teil eines magnetisch-induktiven Durchflussmessers ohne die Spulenstrom-Generationsschaltung bezeichnet. Solche magnetisch-induktive Durchflussaufnehmer nutzen bekanntlich das Faraday'sche Induktionsgesetz zur Erzeugung einer Meßspannung aus.

In der DE-A 20 40 682, US-A 46 41 537, der US-A 47 74 844 oder der WO-A 91/11731 sind verschiedene Ausführungsformen für magnetisch-induktiver Durchflussaufnehmer beschrieben, die dem Meßen eines in einer Rohrleitung strömenden, elektrisch leitfähigen Fluids dienen. Die gezeigten Durchflußaufnehmer umfassen jeweils
- ein in den Verlauf der Rohrleitung einsetzbares Meßrohr zum Führen des Fluids, wobei das Meßrohr zumindest auf einer Fluid berührenden Innenseite elektrisch nicht-leitend ausgebildet ist,
- eine Elektroden-Anordnung mit wenigstens zwei am Meßrohr angeordneten Meßelektroden zum Abgreifen einer im Fluid induzierten elektrischen Spannung, sowie
- eine ebenfalls am Meßrohr angeordnetes Magnetfeld-System
   -- mit wenigstens einer ersten und einer zweiten sattelförmigen Feldspule zum Erzeugen eines Magnetfelds, das das Fluid im Betrieb im wesentlichen transversal, insb. senkrecht, zu einer Längsachse des Meßrohrs durchsetzt sowie
   -- mit einem ferromagnetischen ersten Polschuh für die erste Feldspule und einem ferromagnetischen zweiten Poischuh für die zweite Feldspule zum Führen des Magnetfelds hin zum Fluid.

Während das Magnetfeld-System der in der WO-A 91/11731 beschriebene Durchflußaufnehmer zwei seitlich der Feldspulen angeordnete, mit den Polschuhen magnetisch gekoppelte ferromagnetische Rückführungen zum Führen des Magnetfelds aufweisen, die ringförmig und zueinander parallel um das Meßrohr herum verlegt sind, sind die Durchflußaufnehmer in der DE-A 20 40 682, US-A 46 41 537 und der US-A 47 74 844 jeweils mit zwei zentral angeordneten, mit den Polschuhen magnetisch gekoppelten ferromagnetischen Rückführungen gezeigt, wobei lediglich diese zentral verlaufenden Rückführungen als vergleichsweise dünne Blechstreifen ausgeführt sind.

Ferner ist zumindest bei dem in der US-A 46 41 537 gezeigten Durchflußaufnehmer jeder der Polschuhe mittels zweier ebenfalls vergleichsweise dünner ferromagnetischer Koppel-Elemente mit den Rückführungen verbunden, wobei jedes der Koppel-Elemente jeweils ein spulenkern- und joch-bildendes Abdeckungssegment aufweist, das im wesentlichen zueinander und zur Längsachse des Meßrohrs parallel verlaufende erste bzw. zweite Wicklungsabschnitte der Feldspulen zumindest teilweise überdeckt.

Die Vorteile solcher Magnetfeld-Systeme mit sattelförmigen Feldspulen in Verbindung mit überwiegend dünnwandig ausgebildeten, das Magnetfeld außerhalb des Meßrohrs führenden Elementen sind, wie auch der US-A 46 41 537 entnehmbar, im vergleichsweise geringen Materialaufwand sowie einer hohen Effizienz des Magnetfeld-Systems zu sehen. Infolgedessen weisen entsprechende Durchflußaufnehmer neben niedrigen Herstellungskosten eine hohe Meßgenauigkeit einhergehend mit einer vergleichsweise hohen Meßdynamik auf. Zudem können die Durchflußaufnehmer zumindest in radialer Richtung sehr kompakt gebaut werden.

Untersuchungen derartiger Durchflußaufnehmer haben jedoch ergeben, das oben genannte vorteilhafte Eigenschaften vornehmlich für Durchflußaufnehmer mit Meßrohren von vergleichsweise geringer Nennweite feststellbar sind. Bei Rohrleitungen mit großen Nennweiten und somit auch bei entsprechend großen Nennweiten des Meßrohrs konnte bei herkömmlichen Durchflußaufnehmem mit sattelförmigen Feldspulen die erforderliche Meßgenauigkeit oder auch die gewünschte Meßempfindlichkeit, wie beispielsweise auch in der US-A 55 40 103 diskutiert, nur durch erhöhten Materialaufwand, insb. eine erhöhte Kupfermenge für die Feldspulen erreicht werden. Zu dem hat sich aber auch gezeigt, daß bei großen Nennweiten infolge eines im Vergleich zu kleineren Nennweiten üblicherweise größeren Quotienten von Nennweite zur Meßrohrlänge die Ausbreitung des Magnetfeldes in axialer Richtung nicht mehr ohne weiteres vernachlässigbar ist.

Zur Verringerung von Schwankungen in der Meßempfindlichkeit, die mit einem bei großen Nennweiten oftmals auftretenden Übergreifen des Magnetfelds auf die angeschlossene Rohrleitung einhergehen können, werden beispielsweise seitens zahlreicher Hersteller Erdungsmaßnahmen empfohlen, die der Anwender beim Einbau des Durchflußaufnehmers zusätzlich ergreifen soll. Beispielsweise sind hierfür zwischen dem Durchflußaufnehmer und der angeschlossenen Rohrleitung eingesetzte Erdungsscheiben gebräuchlich. Darüberhinaus besteht eine weitere Möglichkeit zur Reduzierung solcher Abhängigkeiten der Meßempfindlichkeit von den Einbaubedingungen darin, das Meßrohr, jedenfalls aber den nichtleitenden Teil desselben in axialer Richtung hinreichend lang auszubilden und/oder, wie z.B. auch in der US-A 55 40 103 angedeutet, zylindrische Feldspulen zu verwenden und so, wenn auch zu Lasten der Meßdynamik, die Feldspulen und Polschuhe in axialer Richtung vergleichsweise kurz zu dimensionieren.

Ein Ziel der Erfindung ist es daher, magnetisch-induktive Durchflussaufnehmer mit für die Meßdynamik vorteilhaften sattelförmigen Feldspulen dahingehend zu verbessern, daß bei vergleichsweise großen Quotienten von Nennweite zur Meßrohrlänge, insb. Bereich von größer 0,6 und im Nennweitenbereich oberhalb von 100 mm, zumindest aber oberhalb von 500 mm, bei nach wie vor hoher Meßdynamik auch eine vergleichsweise hohe und weitgehend stabile Meßempfindlichkeit erzielt werden kann. Zudem soll der Durchflussaufnehmer sowohl in radialer als auch in axialer Richtung möglichst kompakt dimensioniert sein.

Zur Lösung der Aufgabe besteht die Erfindung in einem dem Messen eines in einer Rohrleitung strömenden, elektrisch leitfähigen Fluids dienenden magnetisch-induktiven Durchflußaufnehmer umfassend ein in den Verlauf der Rohrleitung einsetzbares Meßrohr zum Führen des Fluids, wobei das Meßrohr zumindest auf einer Fluid berührenden Innenseite elektrisch nicht-leitend ausgebildet ist, eine Elektroden-Anordnung mit wenigstens zwei am Meßrohr angeordneten Meßelektroden zum Abgreifen einer im Fluid induzierten elektrischen Spannung, sowie ein ebenfalls am Meßrohr angeordnetes Magnetfeld-System. Bei dem Magnetfeld-System des erfindungsgemäßen Durchflußaufnehmers ist zum Erzeugen eines das Fluid im Betrieb durchsetzenden Magnetfelds wenigstens eine sattelförmige erste Feldspule und eine sattelförmige zweite Feldspule, zum Führen des Magnetfelds gegen das Fluid ein ferromagnetischer erster Polschuh für die erste Feldspule und ein ferromagnetischer zweiter Polschuh für die zweite Feldspule sowie zum Führen des Magnetfelds um das Meßrohr herum wenigstens eine stromaufwärts der beiden Feldspulen um das Meßrohr verlaufende ferromagnetische erste Rückführung und wenigstens eine stromabfwärts der beiden Feldspulen um das Meßrohr verlaufende ferromagnetische zweite Rückführung vorgesehen. Der erste Polschuh ist mittels wenigstens eines ferromagnetischen ersten Koppel-Elements mit der ersten Rückführung und mittels wenigstens eines ferromagnetischen zweiten Koppel-Elements mit der zweiten Rückführung magnetisch gekoppelt, während der zweite Polschuh mittels wenigstens eines ferromagnetischen dritten Koppel-Elements mit der ersten Rückführung und mittels wenigstens eines ferromagnetischen vierten Koppel-Elements mit der zweiten Rückführung magnetisch gekoppelt ist. Jedes der, vorzugsweise einheitlich geformten, Koppel-Elemente weist wenigstens ein im wesentliches rinnenförmigen Abdeckungssegment auf, das einen im wesentlichen auf einem ersten Umfangskreis des Meßrohrs liegenden ersten oder einen im wesentlichen auf einem zweiten Umfangskreis des Meßrohrs liegenden zweiten Wicklungsabschnitt der jeweils zugehörigen Feldspule aufnimmt.

Nach einer bevorzugten ersten Ausgestaltung der Erfindung weist wenigstens eines der Koppel-Elemente wenigstens einen der magnetischen Kopplung mit dem jeweils zugehörigen Pohlschuh dienenden ersten Verbindungsbereich auf, der den jeweiligen Pohlschuh zumindest abschnittsweise flächig kontaktiert.

Nach einer bevorzugten zweiten Ausgestaltung der Erfindung weist wenigstens eines der Koppel-Elemente wenigstens einen der magnetischen Kopplung mit der jeweils zugehörigen Rückführung dienenden zweiten Verbindungsbereich auf, der die jeweilige Rückführung zumindest abschnittsweise flächig kontaktiert.

Nach einer bevorzugten dritten Ausgestaltung der Erfindung weist jede der beiden, insb. sich einander diametral gegenüberliegenden, Feldspulen einen im wesentlichen rechteckförmiger Querschnitt auf.

Nach einer bevorzugten vierten Ausgestaltung der Erfindung bilden der vom rinnenförmigen Abdeckungssegment des ersten Koppel-Elements aufgenommene Wicklungsabschnitt eine erste Seite des Querschnitts der ersten Feldspule und der vom rinnenförmigen Abdeckungssegment des zweiten Koppel-Elements aufgenommene Wicklungsabschnitt eine zweite Seite des Querschnitts der ersten Feldspule.

Nach einer bevorzugten fünften Ausgestaltung der Erfindung weisen die Abdeckungssegmente jeweils wenigstens eine im wesentlichen kreisbogenförmige Kante auf.

Nach einer bevorzugten sechsten Ausgestaltung der Erfindung sind die Koppel-Elemente ebenfalls im wesentlichen sattelförmig ausgebildet.

Ein Grundgedanke der Erfindung besteht darin, durch eine geeignete Anordnung von sattelförmigen Feldspulen und magnetischer Rückführung in Kombination mit vorzugsweise flächig ausgebildeten Koppel-Elementen bei einem mit herkömmlichen Durchflußaufnehmern vergleicbaren Abschirmungsaufwand eine von den tatsächlichen Einbaubedingungen weitgehend unabhängige und somit sehr gut kalibrierbare Magnetfeldführung zu erreichen. Infolge dessen ergeben sich für den erfindungsgemäßen Durchflußaufnehmer in vorteilhafter Weise, insb. im Vergleich zu herkömmlichen Durchflußaufnehmer mit Nennweite-zu-Meßrohrlänge-Verhältnissen von größer 0,6 und Nennweiten oberhalb von 500 mm, niedrige Streuinduktivitäten. Ein weiterer Vorteil der Erfindung besteht darin, daß trotz der weitreichenden Abschirmung des Magnetfeldes kurze Feldaufbauzeiten und somit eine hohe Meßdynamik erzielt werden können.

Aufrgrund des in axialer Richtung in seiner Ausbreitung wirkungsvoll begrenzte Magnetfeld kann der erfindungsgemäße Durchflußaufnehmer auch bei großen Nennweiten mit einem vergleichsweise kurzen Meßrohr ausgestattet und daher auch in axialer Richtung sehr kompakt gebaut sein.

Nachfolgend werden die Erfindung und Vorteile anhand von Ausführungsbeispielen erläutert, die in den Figuren der Zeichnung dargestellt sind. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.
- Fig. 1: zeigt perspektivisch einen in den Verlauf einer Rohrleitung einfügbaren magnetisch-induktiven Durchflußaufnehmer zum Messen eines in der Rohrleitung strömenden Fluids,
- Fig. 2: zeigt den Durchflußaufnehmer von Fig. 1 geschnitten in einer Seitenansicht,
- Fig. 3, 4: zeigen in schematischer Schnittansicht Anordnungen von Polblechen auf einer Außenmantelfläche eines für den Durchflußaufnehmer von Fig. 1 geeigneten Meßrohrs,
- Fig. 5, 6: zeigen in schematischer Schnittansicht Anordnungen von Polbereichen, die in eine Wand eines für den Durchflußaufnehmer von Fig. 1 geeigneten Meßrohrs eingelassen sind, und
- Fig. 7, 8: zeigen in schematischer Schnittansicht Anordnungen von Polblechen auf einer Innenfläche eines für den Durchflußaufnehmer von Fig. 1 geeigneten Meßrohrs.

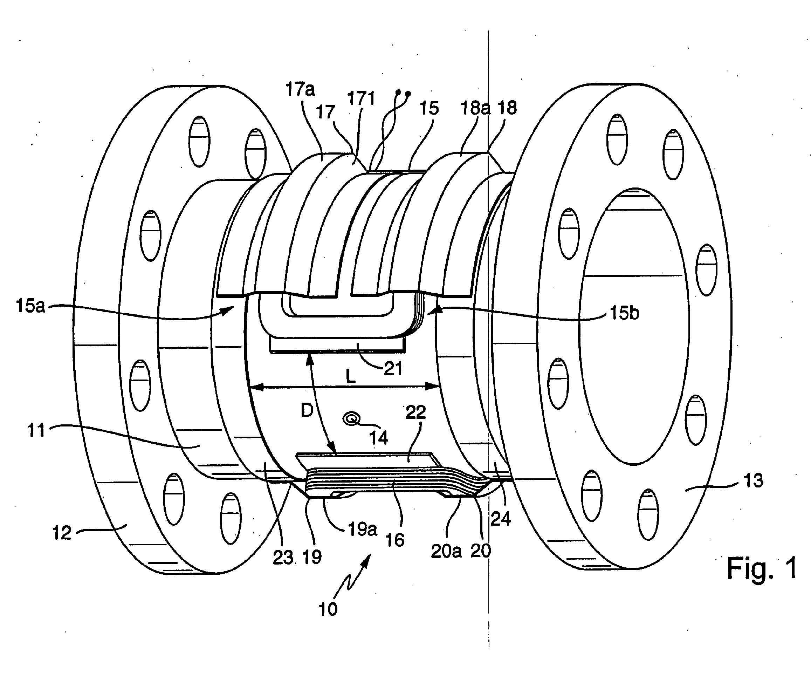

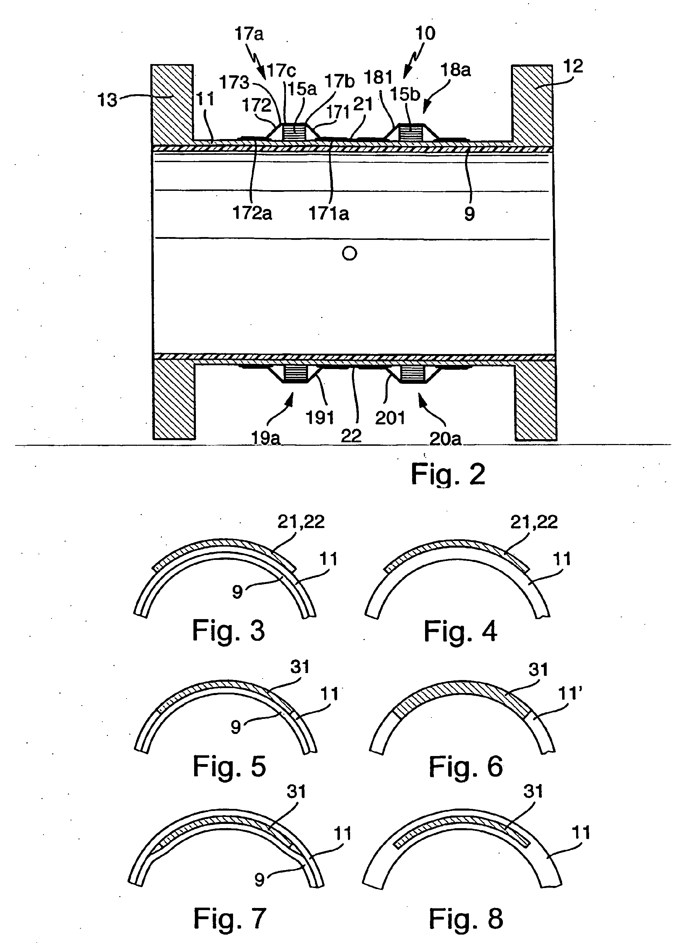

Der in den Fig. 1 und 2 schematisch gezeigte magnetisch-induktive Durchflussaufnehmer 10 ist insbesondere geeignet für die Messung eines in einer - hier nicht gezeigten - Rohrleitung mit einer Nennweitenbereich zwischen etwa 200 mm und 700 mm, insb. zwischen 350 mm und 600 mm, strömenden elektrisch leitfähigen Fluids. Zum Führen des Fluids weist der Durchflussaufnehmer ein in den Verlauf der Rohrleitung einsetzbares Meßrohr 11 auf. Dieses kann aus einem nicht-ferromagnetischen Metall, wie z. B. rostfreiem Stahl, aus geeigneter Keramik, z. B. aus Aluminiumoxid-Keramik, oder aus einem geeigneten Kunststoff, z. B. Hartgummi, bestehen.

Ist das Meßrohr 11 als ein Metall-Meßrohr ausgeführt, so ist es innen mit einer elektrisch nicht-leitenden Isolierung 9, z. B. aus Polyfluorethylen, insb. Polytetrafluorethylen, aus Weichgummi oder aus Hartgummi, ausgekleidet, damit die vom Magnetfeld induzierten Signale nicht vom metallischen Mantel des Meßrohr 11 kurzgeschlossen werden, vgl. die Fig. 2, 3, 5 oder 7.

Im hier gezeigten Ausführungsbeispiel ist das Meßrohr 11 mit Flanschen 12, 13 versehen, über die der Meßwertaufnehmer 10 in die Rohrleitung fluiddicht einsetzbar ist. Anstatt der Flansche sind auch Schraub- oder Schlauchverbindungen möglich, wie sie in der Sanitär- und in der Lebensmittelindustrie üblich sind. Auch flanschlose Verbindungen durch axiale Pressung zwischen Rohrleitung und Meßrohr sind möglich, insb. bei der Verwendung eines aus Keramik oder Kunststoff bestehenden Meßrohrs.

An, ggf. auch in der Wand des Meßrohrs 11 sind, bevorzugt zwei, Meß-Elektroden angeordnet, die einander z. B. diametral gegenüberliegen und von denen in Fig. 1 nur die eine Meß-Elektrode 14 sichtbar ist. Sollen die Meß-Elektroden mit dem Fluid in Berührung kommen, sollen sie also galvanische Meß-Elektroden sein, so sind sie in jeweils einer Bohrung der Wand des Meßrohrs - bei einem Metall-Meßrohr 11 gegen selbiges isoliert - eingesetzt. Im Falle kapazitiver Meß-Elektroden ist keine Berührung mit dem Fluid vorgesehen, und die Meß-Elektroden sind daher vom Fluid isoliert angeordnet. Es können noch weitere Meß-Elektroden und auch Erdungs-Elektroden sowie Überwachungs-Elektroden, z. B. für den Füllstand, vorgesehen werden.

Die Meß-Elektroden sind mit einer nicht gezeigten, üblichen AuswerteElektronik verbindbar, die das von den Meß-Elektroden abgegriffene Signal in ein dem Volumen-Durchfluss entsprechendes Signal umsetzt. Auch hierfür können die in der umfangreichen Literatur vielfach vorbeschriebenen Schaltungen benutzt werden.

Am Meßrohr 11, ggf. auch zumindest teilweise in dessen Wand eingelassen, ist ferner ein Magnetfeld-System zum Erzeugen und Führen eines das Meßrohr 11, vorzugsweise senkrecht zum Elektroden-Verbindungs-Durchmesser und senkrecht zu einer Längsachse des Meßrohrs 11, durchsetzenden Magnetfelds angeordnet.

Zum Erzeugen des Magnetfelds umfaßt das Magnetfeld-System eine sattelförmige erste und eine gegenüberliegende sattelförmige zweite Feldspule 15, 16. Die Feldspulen 15, 16 sind vorzugsweise länglich flach mit im wesentlichen rechteckigem Querschnitt ausgebildet; sie können, falls erforderlich aber auch einen anders geformten Querschnitt aufweisen, beispielsweise einen kreisförmigen oder ovalen. Für die Herstellung der sattelförmigen Feldspulen geeignete Verfahren sind beispielsweise in der EP-A 768 685 beschrieben.

Beide Feldspulen 15, 16 sind im hier gezeigten Ausführungsbeispiel einander diametral gegenüberliegend am Meßrohr 11 angeordnet, und zwar jeweils möglichst nah an der Außenmantelfläche des Meßrohrs 11. Zudem sind die beiden Feldspulen 15, 16 so am Meßrohr 11 angeordenete, daß eine jeweilige Hauptachse einer jeden Feldspule 15, 16 im wesentlichen senkrecht zur Längsachse des Meßrohrs 11, also auch in Richtung eines Radius der Querschnittsfläche des Meßrohrs 11 verläuft. Falls erforderlich, insb. bei Verwendung von mehr als zwei Feldspulen können letztere auch in einer anderen geeigneten Weise am Meßrohr 11 angeordnet sein.

Das Magnetfeld wird mittels eines von einer üblichen Spulenstrom-GeneratorSchaltung erzeugten und in die Feldspulen eingespeisten Errgerstrom erzeugt. Hierfür können die in der Literatur vielfach vorbeschriebenen Schaltungen benutzt werden.

Zum Führen des Magnetfelds gegen das Fluid umfaßt das Magnetfeld-System weiters einen ferromagnetischen ersten Polschuh 21 für die Feldspule 15 und einem ferromagnetischen zweiten Polschuh 22 für die Feldspule 16. In dem in den Fig. 1, 2, 3 oder 4 gezeigten Ausführungsbeispiel ist jeder der beiden Polschuhe 21, 22 inform eines ebenfalls sattelförmigen Polblechs realsiert, das mit einer Außenfläche an die Sattelform eine jeweilige Kontaktfläche der zugehöriggen Feldspule 15 bzw. 16 angepaßt ist. Die beiden Polbleche sind in der dem Fachmann bekannten Weise auf der Außenmantelfläche des Meßrohrs 11 angeordnet, so daß sie in Umfangskreis-Richtung gesehen jeweils beidseits der jeweiligen Spule 15, 16 und unter Einhaltung eines ausreichenden gegenseitigen Abstands D der Enden der Polbleche verlaufen; die Pohlbleche können beispielweise aber auch so auf der Außenmantelfläche des Meßrohrs 11 angeordnet sein, daß sie sich im wesentlichen nur innerhalb des lichten Querschnitts der zugehörigen Feldspule 15, 16 befinden und somit die jeweilige Feldspule 15, 16 weder in axialer Richtung noch in Umfangskreis-Richtung gesehen überragen. In Fig. 1 ist von den Polblechen 21, 22 jeweils nur der vordere Teil zu sehen; deren hinterer, gleich großer Teil ist verdeckt. Als Material für die Polbleche wird vorzugsweise weichmagnetisches Material, wie z.B. Trafoblech oder dergleichen, verwendet.

Zum Führen des Magnetfelds außerhalb des zu messenden Fluids und um das Meßrohr herum umfaßt das Magnetfeld-System wenigstens eine ferromagnetische erste Rückführung 23. Darüber hinaus ist eine ebenfalls dem Führen des Magnetfelds um das Meßrohr dienende zusätzliche zweite ferromagnetische Rückführung 24 vorgesehen. Die Rückführung 23 ist, wie in der Fig. 1 dargestellt, stromaufwärst und die Rückführung 24 stromabwärts der beiden Feldspulen 15, 16 und der Polschuhe 21, 22 angeordnet. Im hier gezeigten Ausführungsbeispiel ist jede der beiden Rückführungen 23, 24 in vorteilhafter Weise jeweils als ein auf der Außenmantelfläche des Meßrohrs 11 im wesentlichen direkt aufliegendes und, insb. zum jeweils anderen parallel verlaufendes, weichmagnetisches Rückführungsblech realisiert. Anders gesagt, die beiden Rückführungen 23, 24 sind hier als geschlossene, außen auf dem Meßrohr 11 aufliegende und dabei letzteres umfassende Ringe oder Reifen ausgebildet. Ein gegenseitiger, insb. im wesentlichen gleichbleibender, Abstand L der Rückführungsbleche 23, 24 liegt dabei vorzugsweise zwischen dem 0,3-fachen und dem 0,7-fachen, insb. zwischen dem 0,4-fachen und dem 0,6-fachen, der Nennweite des Meßrohrs 11. Eine Dicke der Rückführungen 23, 24 ist in radialer Richtung vorzugsweise etwa zwischen 1 mm bis 5 mm gewählt.

Während die Fig. 1, wie oben schon kurz erwähnt, die Anordnung der Polbleche 21, 22 auf der Außenmantelfläche des Meßrohrs 11 zeigt, sind in den Fig. 5, 6, 7 und 8 andere Möglichkeit der Realisierung der Polschuhe veranschaulicht, nämlich deren Ausbildung als Polbereiche 31. In Fig. 5 ist das metallische Meßrohr 11 mit dem in seine Wand eingesetzten, z. B. eingeschweißten oder eingelöteten, Polbereich 31 gezeigt. In Fig. 6 ist der Polbereich 31 im Falle eines keramischen Meßrohrs 11 ein magnetisch leitfähiger Keramikbereich. Diese Polbereiche können jeweils durch Beimischung von entsprechenden Metallpulvern während der Herstellung des Meßrohrs 11 erzeugt werden. Die Fig. 7 zeigt die Anordnung eines Polblechs 31 auf der Innenmantelfläche des metallischen Meßrohrs 11, wobei die Polbleche ebenso wie das Meßrohr 11 durch die Isolierung 9 vom Fluid getrennt sind. Die Fig. 8 zeigt den entsprechenden Fall für ein aus Kunststoff bestehendes Meßrohr 11, bei dem die Polbleche in den Kunststoff eingelassen sind.

Die anhand der Figuren 3 bis 8 veranschaulichten verschiedenen Varianten der Anordnung und der Realisierung der Polbleche ist in vergleichbarer Weise auch auf die Rückführungsbleche anwendbar. Auch dafür wurde auf die Darstellung anhand von Figuren verzichtet, da deren Anordnung vom Fachmann ebenfalls ohne weiteres realisiert werden kann.

Wie in den Fig. 1 und 2 gezeigt, ist der Polschuh 21 mittels wenigstens eines ferromagnetischen ersten Koppel-Elements 17 mit der Rückführung 23 und mittels wenigstens eines ferromagnetischen zweiten Koppel-Elements 18 mit der Rückführung 24 magnetisch gekoppelt.

Zur Optimierung der Feldführung, insb. zur Minimierung der Ausbreitung des Magnetfelds in Richtung der Längsachse des Meßrohrs 11, weist das Koppel-Element 17 wenigstens ein im wesentlichen rinnenförmiges, Abdeckungssegment 17a auf, das sich entlang eines im wesentlichen auf einem Umfangskreis des Meßrohrs 11 liegenden ersten Wicklungsabschnitts 15a der Feldspule 15 erstreckt und das zumindest diesen einen Wicklungsabschnitt 15a oder ein entsprechendes erstes Spulensegment der ersten Feldspule 15 aufnimmt und überdeckt. Das Abdeckungssegment 17a des Koppel-Elements 17 umfaßt dafür eine polschuh-seitige erste Wandung 171 und eine rückführungs-seitige zweite Wandung 172 die mittels einer oberhalb der Feldspule 15 angeordneten, abdeckenden dritten Wandung 173 miteinander verbunden sind, unzwar so, daß die beiden Wandungen 171 und 172 einen ausreichenden Abstand voneinander haben. Dieser Abstand liegt vorzugsweise oberhalb von 30 mm.

Die Wandungen 171, 172 und 173 sind bevorzugt so geformt und zueinander angeordnet, daß das Abdeckungssegment 17a einen im wesentlichen U-, V- oder, wie in der Fig. 2 gezeigt, einen trapez-förmig Querschnitt aufweist.

Das Koppel-Element 17 kann in vorteilhafter Weise aus einem vergleichsweise dünnen Blech, beispielsweise durch kalt-verformende Verfahren, hergestellt sein.

Gemäß einer bevorzugten Ausgestaltung der Erfindung ist durch beiden Wandungen 171, 173 eine im wesentlichen kreisbogenförmige erste Kante 17b des Abdeckungssegment 17a gebildet. Überdies ist durch beiden Wandungen 172, 173 eine ebenfalls kreisbogenförmige zweite Kante 17c des Abdeckungssegments 17a gebildet, die im wesentlichen parallel zur ersten Kante 17b verläuft, vorzugsweise so, daß die Wandung 173 im wesentlichen koaxial zum Meßrohr 11 verlaufend angeordnet ist. Zu dem ist das Koppel-Element 17 vorzugsweise ebenfalls im wesentlichen sattelförmig ausgebildet.

Wie in den Fig. 1 und 2 gezeigt, ist in vorteilhafter Weise sowohl die polschuhseitigen Wandung 171 als auch die rückführungs-seitigen Wandung 172 jeweils mit einer Kontaktfläche 171 a bzw. 172a versehen. Jede der beiden Kontaktflächen 171 a, 172a ist so ausgebildet, daß sie, auf den Polschuh 21 bzw. auf die Rückführung 23 aufgesetzt, sich möglichst paßgenau an eine zugehörige Gegenkontaktfläche 21 a des Polschuhs 21 bzw. eine zugehörige Gegenkontaktfläche 23a der Rückführung 23 anschmiegt.

Wie in der Fig. 1 gezeigt, ist vorzugsweise auch beim Koppel-Element 18 ein mit dem Abdeckungssegment 17a vergleichbares Abdeckungssegment 18a vorgesehen, das sich entlang eines im wesentlichen auf einem Umfangskreis des Meßrohrs 11 liegenden zweiten Wicklungsabschnitts 15b der Feldspule 15 erstreckt und das zumindest diesen zweiten Wicklungsabschnitt 15b oder ein entsprechendes zweites Spulensegment der Feldspule 15 aufnimmt und überdeckt. Wie sich unschwer erkennen läßt, ist durch die polschuh-seitige Wandung 171 des Abdeckungssegments 17a und eine entsprechende polschuh-seitige Wandung 181 des Abdeckungssegments 18a ein Bereich des Magnetfeld-Systems gebildet, der mit einem herkömmlichen Spulenkern oder Spulenträger vergleichbar ist. Darüber hinaus ist auch der zweite Polschuh 22 in einer mit dem Polschuh 21 vergleichbaren Weise mit den am Durchflussaufnehmer 10 vorgesehenen Rückführungen 23, 24 magnetisch gekoppelt. Demgemäß umfaßt das Magnetfeld-System ferner wenigstens ein ferromagnetisches, insb. zum ersten Koppel-Element 17 identisch geformtes, drittes Koppel-Element 19 für den Polschuh 22 und die Rückführung 23, das ebenfalls wenigstens ein rinnenförmigen Abdeckungssegment 19a für einen ersten Wicklungsabschnitt der zweiten Feldspule 16 aufweist. Darüber hinaus ist noch ein ferromagnetisches, insb. zum zweiten Koppel-Element 18 identisch geformtes, viertes Koppel-Element 20 mit einem rinnenförmigen Abdeckungssegment 20a für einen zweiten Wicklungsabschnitt der zweiten Feldspule 16 vorgesehen, das den Polschuh 22 und die Rückführung 24 miteinander magnetisch koppeln.

Wie in der Fig. 1 und 2 angedeutet, ist eine jeweilige Breite der spulenkernbildenden Wandungen 171, 181, 191, 201 in radialer Richtung wenig größer als ein Höhe der Feldspulen 15,16. Außerdem sind die jeweils spulenkernbildenden Wandungen 171, 181 bzw. 191, 201 unter Einhaltung eines gegenseitigen Abstands in der entsprechenden Feldspule 15 bzw. 16 angeordnet.

Nach einer bevorzugten Ausgestaltung der Erfindung weist jedes der beiden Abdeckungssegmente eine Länge auf, die wenigstens einem Viertel einer Seitenlänge der Feldspule 15 bzw. 16 entspricht. Im übrigen ist die Länge der beiden Abdeckungssegmente vorzugsweise so groß wie möglich zu wählen.

Nach einer weiteren bevorzugten Ausgestaltung der Erfindung sind das erste und das zweite Koppel-Element 17, 18 jeweils einstückig ausgebildet.

Nach einer anderen bevorzugten Ausgestaltung der Erfindung sind beide Koppel-Elemente 17, 18 mittels eines gemeinsamen Bleches gefertigt, so daß eine so gebildetes, der magnetischen Kopplung der beiden Rückführungen 23, 24 an den Polschuh 21 dienendes Joch im wesentlichen einstückig ist.

Nach einer bevorzugten Weiterbildung dieser Ausgestaltung der Erfindung ist auch der Polschuhe 21 in das Joch mit integriert, also gemeinsam mit den beiden Koppel-Elementen 17, 18 in einstückiger Weise gefertigt.

Nach einer bevorzugten Ausgestaltung der Erfindung sind die beiden Koppel-Elemente 17, 18 zueinander zumindest spiegelsymmetrisch ausgebildet; sie können in vorteilhafter Weise aber auch identisch geformt sein.

Nach einer bevorzugten Ausgestaltung der Erfindung sind die für das Magnetfeld-System vorgesehenen Koppel-Elemente 17, 18, 19, 20 zueinander im wesentlichen identisch geformt. Darüber hinaus bestehen die Koppel-Elemente 17, 18, 19, 20 vorzugsweise aus dem gleichen Material, beispielsweise Trafoblech oder dergleichen.

Die Polbleche 21, 22 und/oder die Rückführungsbleche 23, 24 so wie auch die Koppel-Elemente 17, 18, 19, 20 können nicht nur in Form von Einzelblechen, sondern auch als Blechpakete realisiert werden, wie sie aus der Transformatoren- oder der Elektromotoren-Technik bekannt sind. Diese Blechpakete bestehen aus zwei oder mehreren übereinandergeschichteten Einzelblechen aus einem weichmagnetischen Material mit entsprechend dem erforderlichen niedrigen magnetischen Widerstand bemessener Breite, z. B. aus sogenannten Komblechen, deren Oberfläche mit einer dünnen elektrisch isolierenden Schicht versehen ist. Somit sind die einzelnen Bleche des Blechpakets elektrisch gegeneinander isoliert, wodurch Wirbelstromverluste weitgehend reduziert werden können.

Ein Ziel aller Ausführungsbeispiele liegt im übrigen auch darin, ein von den Polblechen bzw. - bereichen über die Spulenkerne zu den Rückführungsblechen bzw. -bereichen geschlossener Magnetkreis mit möglichst niedrigem magnetischem Widerstand auszubilden.

Der magnetisch-induktive Durchflussaufnehmer ist schließlich mit einer nicht gezeigten, das Meßrohr 11, Magnetfeld-System sowie die Meß-Elektroden von außen umgebenden Umhüllung, beispielsweise mit einem eine magnetischer Abschirmung bewirkenden Metallgehäuse, versehen. Dieses kann bei Bedarf mit einem Füllstoff gefüllt, z. B. ausgeschäumt, sein.

## Patentansprüche

1. Magnetisch-induktiver Durchflußaufnehmer (10) zum Messen eines in einer Rohrleitung strömenden, elektrisch leitfähigen Fluids, welcher Durchflußaufnehmer (10) umfaßt:
- ein in den Verlauf der Rohrleitung einsetzbares Meßrohr (11) zum Führen des Fluids, wobei das Meßrohr (11) zumindest auf einer Fluid berührenden Innenseite elektrisch nicht-leitend ausgebildet ist,
- eine Elektroden-Anordnung (14) mit wenigstens zwei am Meßrohr angeordneten Meßelektroden zum Abgreifen einer im Fluid induzierten elektrischen Spannung, sowie
- ein ebenfalls am Meßrohr (11) angeordnetes Magnetfeld-System
-- mit wenigstens einer sattelförmigen ersten Feldspule (15) und einer sattelförmigen zweiten Feldspule (16) zum Erzeugen eines das Fluid im Betrieb durchsetzenden Magnetfelds,
-- mit einem ferromagnetischen ersten Polschuh (21) für die erste Feldspule (15) und einem ferromagnetischen zweiten Polschuh (22) für die zweite Feldspule (16) zum Führen des Magnetfelds gegen das Fluid sowie
-- mit wenigstens einer stromaufwärts der beiden Feldspulen (15, 16) um das Meßrohr (11) verlaufenden ferromagnetischen ersten Rückführung (23) und wenigstens einer stromabwärts der beiden Feldspulen (15, 16) um das Meßrohr (11) verlaufenden ferromagnetischen zweiten Rückführung (24) zum Führen des Magnetfelds um das Meßrohr (11) herum,
- wobei der erste Polschuh (21) mittels wenigstens eines ferromagnetischen ersten Koppel-Elements (17) mit der ersten Rückführung (23) und mittels wenigstens eines ferromagnetischen zweiten Koppel-Elements (18) mit der zweiten Rückführung (24) und der zweite Polschuh (22) mittels wenigstens eines ferromagnetischen dritten Koppel-Elements (19) mit der ersten Rückführung (23) und mittels wenigstens eines ferromagnetischen vierten Koppel-Elements (20) mit der zweiten Rückführung (24) magnetisch gekoppelt sind und
- wobei jedes der Koppel-Elemente (17, 18, 19, 20) wenigstens ein im wesentlichen rinnenförmiges Abdeckungssegment (17a, 18a, 19a, 20a) aufweist, das einen im wesentlichen auf einem ersten Umfangskreis des Meßrohrs (11) liegenden ersten Wicklungsabschnitt (15a, 16a) oder einen im wesentlichen auf einem zweiten Umfangskreis des Meßrohrs (11) liegenden zweiten Wicklungsabschnitt (15b, 16b) der jeweils zugehörigen Feldspule (15 bzw. 16) aufnimmt.

2. Magnetisch-induktiver Durchflußaufnehmer nach Anspruch 1 bei dem wenigstens eines der Koppel-Elemente (17) wenigstens einen der magnetischen Kopplung mit dem jeweils zugehörigen Polschuh (21) dienenden Verbindungsbereich (171 a) aufweist, der den jeweiligen Polschuh (21) zumindest abschnittsweise flächig kontaktiert.

3. Magnetisch-induktiver Durchflußaufnehmer nach einem der vorherigen Ansprüche bei dem wenigstens eines der Koppel-Elemente (17) wenigstens einen der magnetischen Kopplung mit der jeweils zugehörigen Rückführung (23) dienenden Verbindungsbereich (172a) aufweist, der die jeweilige Rückführung (23) zumindest abschnittsweise flächig kontaktiert.

4. Magnetisch-induktiver Durchflußaufnehmer nach einem der vorherigen Ansprüche bei dem jede der beiden, insb. sich einander diametral gegenüberliegenden, Feldspulen (15, 16) einen im wesentlichen rechteckförmigen Querschnitt aufweist.

5. Magnetisch-induktiver Durchflußaufnehmer nach dem vorherigen Anspruch bei dem der vom rinnenförmigen Abdeckungssegment (17a) des ersten Koppel-Elements (17) aufgenommene Wicklungsabschnitt (15a) eine erste Seite des Querschnitts der ersten Feldspule (15) und der vom rinnenförmigen Abdeckungssegment (18a) des zweiten Koppel-Elements (18) aufgenommene Wicklungsabschnitt (15b) eine zweite Seite des Querschnitts der ersten Feldspule (15) bilden.

6. Magnetisch-induktiver Durchflußaufnehmer nach einem der vorherigen Ansprüche bei dem die Abdeckungssegmente (17) jeweils wenigstens eine im wesentlichen kreisbogenförmige Kante (17b, 17c) aufweisen.

7. Magnetisch-induktiver Durchflußaufnehmer nach einem der vorherigen Ansprüche bei dem die Koppel-Elemente (17, 18, 19, 20) ebenfalls im wesentlichen sattelförmig ausgebildet sind.

## Claims

1. Electromagnetic flow sensor (10) designed to measure an electrically conductive fluid flowing through a pipe, said flow sensor (10) comprising:
- a measuring tube (11), which can be inserted in the run of the pipe, to carry the fluid, wherein the measuring tube (11) is not electrically conductive at least on an interior side that is in contact with fluid,
- an electrode arrangement (14) with at least two measuring electrodes arranged on the measuring tube designed to measure an electrical voltage induced in the fluid, as well as
- a magnetic field system also arranged on the measuring tube (11)
-- with at least one saddle-shaped first field coil (15) and a second saddle-shaped field coil (16) designed to generate a magnetic field that passes through the fluid during operation,
-- with a first ferromagnetic pole piece (21) for the first field coil (15) and a second ferromagnetic pole piece (22) for the second field coil (16), designed to guide the magnetic field towards the fluid, and
-- with at least a first ferromagnetic back guide (23) that surrounds the measuring tube (11) and is located upstream from the two field coils (15, 16), and with at least a second ferromagnetic back guide (24) that surrounds the measuring tube (11) and is located downstream from the two field coils (15, 16), designed to guide the magnetic field around the measuring tube (11),
- wherein the first pole piece (21) is magnetically coupled to the first back guide (23) via at least a ferromagnetic first coupling element (17) and to the second back guide (24) via at least a ferromagnetic second coupling element (18), and wherein the second pole piece (22) is magnetically coupled to the first back guide (23) via at least a ferromagnetic third coupling element (19) and to the second back guide (24) via at least a ferromagnetic fourth coupling element (20), and
- wherein each of the coupling elements (17, 18, 19, 20) has at least one essentially channel-shaped cover segment (17a, 18a, 19a, 20a) which supports a first coil section (15a, 16a) of the associated field coil (15 or 16), which is essentially located on a first circumference of the measuring tube (11), or a second coil section (15b, 16b) of the associated field coil (15 or 16), which is essentially located on a second circumference of the measuring tube (11).

2. Electromagnetic flow sensor as claimed in Claim 1 wherein at least one of the coupling elements (17) has at least one of the connection areas (171 a) that serve to create the mechanical coupling with the associated pole piece (21), said area in surface contact, at least in part, with the specific pole piece (21).

3. Electromagnetic flow sensor as claimed in one of the previous claims wherein at least one of the coupling elements (17) has at least one of the connection areas (172a) that serve to create the mechanical coupling with the associated back guide (23), said area in surface contact, at least in part, with the specific back guide (23).

4. Electromagnetic flow sensor as claimed in one of the previous claims, wherein each of the two field coils (15, 16), particularly field coils positioned diametrically opposite to one another, has an essentially rectangular cross section.

5. Electromagnetic flow sensor as claimed in the previous claim, wherein the coil segment (15a) supported by the channel-shaped cover segment (17a) of the first coupling element (17) forms a first side of the cross-section of the first field coil (15), and the coil segment (15b) supported by the channel-shaped cover segment (18a) of the second coupling element (18) forms a second side of the cross-section of the first field coil (15).

6. Electromagnetic flow sensor as claimed in one of the previous claims, wherein the cover segments (17) each have at least an edge (17b, 17c) which is essentially shaped like a circular arc.

7. Electromagnetic flow sensor as claimed in one of the previous claims, wherein the coupling elements (17, 18, 19, 20) likewise have an essentially saddle-like shape.

## Revendications

1. Débitmètre magnéto-inductif (10) destiné à la mesure d'un fluide électroconducteur circulant dans une conduite, lequel débitmètre (10) comprend :
- un tube de mesure (11) pouvant être disposé dans l'écoulement de la conduite, lequel tube est destiné à guider le fluide, le tube de mesure (11) étant électriquement non conducteur au moins sur la face intérieure entrant en contact avec le fluide,
- une configuration d'électrodes (14) avec au moins deux électrodes de mesure disposées sur le tube de mesure, destinées à prélever une tension électrique induite dans le fluide, ainsi que
- un système de champ magnétique disposé également sur le tube de mesure (11)
-- avec au moins une bobine de champ (15) en forme de selle et une deuxième bobine de champ (16) en forme de selle, destinées à générer un champ magnétique induisant le fluide pendant le fonctionnement,
-- avec une première pièce polaire (21) ferromagnétique pour la première bobine de champ (15) et une deuxième pièce polaire (22) ferromagnétique pour la deuxième bobine de champ (16), destinées à guider le champ magnétique vers le fluide, ainsi que
-- avec au moins une première tôle de guidage arrière (23) ferromagnétique entourant le tube de mesure (11), disposée en amont des deux bobines de champ (15, 16) et avec au moins une deuxième tôle de guidage arrière (24) ferromagnétique entourant le tube de mesure (11), disposée en aval des deux bobines de champ (15, 16), destinées à guider le champ magnétique autour du tube de mesure (11),
- la première pièce polaire (21) étant couplée de façon magnétique au moyen d'au moins un premier élément de couplage (17) ferromagnétique avec la première tôle de guidage arrière (23) et au moyen d'au moins un deuxième élément de couplage (18) avec la deuxième tôle de guidage arrière (24), et la deuxième pièce polaire (22) au moyen d'au moins un troisième élément de couplage (19) ferromagnétique avec la première tôle de guidage arrière (23) et au moyen d'au moins un quatrième élément de couplage (20) avec la deuxième tôle de guidage arrière (24), et
- chacun des éléments de couplage (17, 18, 19, 20) présentant au moins un segment de recouvrement (17a, 18a, 19a, 20a) pour l'essentiel en forme de gouttière, lequel segment supporte un premier segment d'enroulement (15a, 16a) pour l'essentiel disposé sur un premier cercle circonférentiel du tube de mesure (11), ou lequel segment supporte un deuxième segment d'enroulement (15b, 16b) pour l'essentiel disposé sur un deuxième cercle circonférentiel du tube de mesure (11), de la bobine de champ (15 ou 16) respective.

2. Débitmètre magnéto-inductif selon la revendication 1, pour lequel au moins l'un des éléments de couplage (17) présente au moins une zone de liaison (171a) avec la pièce polaire (21) correspondante, servant au couplage magnétique, laquelle zone assure au moins partiellement un contact plan de la pièce polaire (21) respective.

3. Débitmètre magnéto-inductif selon l'une des revendications précédentes, pour lequel au moins l'un des éléments de couplage (17) présente au moins une zone de liaison (172a) avec la tôle de guidage arrière (23) correspondante, servant au couplage magnétique, laquelle zone assure au moins partiellement un contact plan de la tôle de guidage arrière (23) respective.

4. Débitmètre magnéto-inductif selon l'une des revendications précédentes, pour lequel chacune de deux bobines de champ, notamment disposées de façon diamétralement opposée, présente pour l'essentiel une section rectangulaire.

5. Débitmètre magnéto-inductif selon la revendication précédente, pour lequel le segment d'enroulement (15a) supporté par le segment de recouvrement (17a) en forme de gouttière du premier élément de couplage (17) forme une première face de la section de la première bobine de champ (15) et le segment d'enroulement (15b) supporté par le segment de recouvrement (18a) en forme de gouttière du deuxième élément de couplage (18) forme une deuxième face de la section de la première bobine de champ (15).

6. Débitmètre magnéto-inductif selon l'une des revendications précédentes, pour lequel les segments de recouvrement (17) présentent chacun au moins une arête (17b, 17c) pour l'essentiel en forme d'arc de cercle.

7. Débitmètre magnéto-inductif selon l'une des revendications précédentes, pour lequel les éléments de couplage (17, 18, 19, 20) sont également exécutés pour l'essentiel en forme de selle.
